# EUROPÄISCHE PATENTANMELDUNG

(11) **EP 0 798 259 A1**
(43) Veröffentlichungstag der Anmeldung: **01.10.1997**
(21) Anmeldenummer: 97105086.9
(22) Anmeldetag: 26.03.1997
(51) Int. Cl.: B66D 1/58, B66D 5/14, F16D 66/00

(54) **Hubwerk**

(30) Priorität: 26.03.1996 DE 19611811
(71) Anmelder: Zeppenfeld, Aloys, 57462 Olpe-Oberveischede (DE)
(72) Erfinder: Zeppenfeld, Aloys, 57462 Olpe/Biggesee (DE); Zeppenfeld, Arian, 57462 Olpe/Oberveischede (DE)
(74) Vertreter: Müller, Gerd, Dipl.-Ing.

(57) **Zusammenfassung**

Bei einem Hubwerk, das mit einem Brems- oder Getriebebremsmotor ausgerüstet ist und eine Überlastsicherung aufweist, insbesondere ein Bauaufzug mit einer Fahrbühne, wird bei einer Überladung des Hubwerkes bzw. Bauaufzuges ein sicheres Abschalten erreicht, wenn die Überlastsicherung ein in Umfangsrichtung bewegliches, zwischen dem Motor und der Bremse angeordnetes Schaltelement aufweist, dem ein positionsgebundenes Abschaltmittel zugeordnet ist.

## Beschreibung

Hubwerk, das mit einem Brems- oder Getriebebremsmotor ausgerüstet ist und eine Überlastsicherung aufweist, insbesondere Bauaufzug mit einer Fahrbühne oder dergleichen.

Hubwerke sind in Form von Bau- oder Personenaufzügen bekannt. Bauaufzüge, die insbesondere als Zahnstangen-Bauaufzüge ausgebildet sind, dienen zur Beförderung von Baugütern, z.B. Steinen, Zementsäcken und ähnlichem Bedarf auf einer Baustelle. Um die Güter anheben oder absenken zu können, ist der Bauaufzug mit einer Fahrbühne oder einem sonstigen Lastaufnahmemittel ausgestattet, welche bei Zahnstangen-Bauaufzügen in der Regel mittels eines Getriebebremsmotors verfahrbar sind.

Auf den Baustellen kommt es vor, daß die Fahrbühne durch Auflegen zu vieler schwerer Güter überladen wird. Beim Starten eines Aufwärtshubes der überladenen Fahrbühne ergibt sich ein hohes Belastungsmoment für den Motor. Da der Getriebebremsmotor nur für eine begrenzte Antriebsleistung ausgelegt ist, wird bei einer übermäßigen Beladung die Aufwärtsfahrt verhindert.

Ein derartiger Schutz ist beim Starten einer Abwärtsfahrt nicht gegeben. Die Überladung der Fahrbühne kann so hoch sein, daß die beim Abschalten des Getriebebremsmotors in Funktion tretende Bremse nicht mehr in der Lage ist, die überladene Fahrbühne abzubremsen; das kann zu einer starken Überhitzung oder gar zur Zerstörung der Bremse führen. Die Fahrbühne schlägt dann mit voller Geschwindigkeit auf einen für derartige Belastungen zu schwach ausgelegten Puffer auf, wodurch sowohl der gesamte Antrieb der Fahrbühne als auch der Bauaufzug selbst beschädigt oder gar zerstört werden kann; es versteht sich, daß mitfahrende Personen einer entsprechend großen Gefährdung unterliegen. Die Überladung einer Fahrbühne stellt somit, insbesondere bei der Abwärtsfahrt, ein großes Risiko dar. Um dieses zu begrenzen sind im Stand der Technik die verschiedensten Überlastsicherungen bekannt; z.B. wird der gesamte Antrieb einer Fahrbühne in Gleitschienen geführt und federnd gelagert, oder die Fahrbühne ist an einem Laufwagen des Bauaufzuges federnd aufgehängt. Diese Einrichtungen arbeiten aufgrund von hohen Reibungsverlusten, z.B. in den Gleitschienen, sehr ungenau, was eine große Hysterese zur Folge hat. Hinzu kommt, daß Bauaufzüge und andere im Freien eingesetzte Hubwerke allen Witterungsverhältnissen ausgesetzt sind und einer starken Verschmutzung durch Staub, Sand, etc. unterliegen, was die Einrichtungen beeinträchtigt, die dann noch ungenauer arbeiten. Außerdem ist bei diesen Einrichtungen ein häufiges Verecken oder Verkanten des Antriebes oder der Fahrbühne zu beobachten, wodurch die Abschaltgenauigkeit dann völlig unzureichend wird. Speziell bei Zahnstangen-Bauaufzügen ist eine Überlastsicherung bekannt, bei der der Antrieb in seiner Aufhängung drehbar um die Wellenachse des Abtriebritzels gelagert ist und durch eine Drehmomentstütze federnd abgestützt wird. Diese Art der Abschaltung ist zwar genauer als die zuvor genannten Varianten aber wegen der zu bewegenden Massen immer noch sehr ungenau.

Bei allen zuvor genannten Überlastsicherungen werden zum Abschalten des Antriebes einer überladenen Fahrbühne normale Betriebsendschalter eingesetzt, die konstruktionsbedingt zwischen Ein- und Ausschalten eine große Hysterese aufweisen. Je größer die Schalt-Hysterese, desto ungenauer die Abschaltung. Das wirkt sich beim Beladen und insbesondere bei einer Fahrtunterbrechung der Fahrbühne aus. So ist zwar eine Anfahrt einer Fahrbühne, die um ca. 20% über ihre zulässige Nutzlast beladen wurde, noch möglich, bei einer Fahrtunterbrechung ist eine Weiterfahrt dann jedoch erst nach einer Entlastung der Fahrbühne bis auf etwa 70% ihrer zulässigen Nutzlast wieder möglich. Überdies wird bei den zuvor beschriebenen Einrichtungen ein genaues Abschalten aufgrund einer Überladung durch eine mehr oder minder außermittige Beladung der Fahrbühne und dem sich dadurch ändernden Hebelarm zusätzlich erschwert.

Bei Personenaufzügen ist es bekannt, die Standfläche des Aufzuges wie eine Waage auszubilden, so daß es unerheblich ist, wo die Personen stehen. Durch diese Maßnahme wird bereits im Stillstand eine Überladung des Aufzuges festgestellt und der Aufzug setzt sich erst gar nicht in Bewegung. Es müssen zunächst so viele Personen den Aufzug verlassen, bis die Waage eine für den Aufzug zugelassene Nennlast feststellt. Auch hier erfolgt die Abschaltung über einen Betriebs-Endschalter. Um die konstruktionsbedingt große Hysterese im Endschalter zu überwinden, muß die Personenkapazität des Aufzuges temporär weiter verringert werden; bei kleinen Aufzügen kann das bis zur Hälfte der Nutzlast ausmachen. Eine Fahrbühne eines Bauaufzuges analog wie eine Waage zu konstruieren, bei der es unerheblich ist, wo man die Last absetzt, wäre für einen Bauaufzug zu kostspielig und für den rauhen Baustellenbetrieb völlig ungeeignet.

Eine exakte Messung über Dehnungsstreifen entfällt von vornherein aus Kostengründen. Sie ist so teuer wie ein kleiner Bauaufzug.

Der Erfindung liegt daher die Aufgabe zugrunde, ein Hubwerk mit einer Überlastsicherung, insbesondere für einen Bauaufzug, zu schaffen, das die vorgenannten Nachteile vermeidet und mit einfachen und preiswerten Mitteln ein sicheres ausreichend genaues Abschalten ermöglicht.

Die Aufgabe wird erfindungsgemäß dadurch gelöst, daß die Überlastsicherung ein in Umfangsrichtung bewegliches, zwischen dem Motor und der Bremse angeordnetes Schaltelement aufweist, dem ein positionsgebundenes Abschaltmittel zugeordnet ist. Der Erfindung liegt die Überlegung zugrunde, die bei einer Überladung einer Fahrbühne an der Bremse des Motors drehmomentartig auftretenden höheren Kräfte auszunutzen, um bereits im Ruhezustand der Fahrbühne über das Schaltelement ein Starten einer Auf- oder zu verhindern. Denn die durch die Überladung der Fahrbühne entstehenden Kräfte pflanzen sich über das Getriebe und die Motorwelle auf die Bremse sowie das mit ihr verbundene Schaltelement fort, das sich in Umfangsrichtung dreht, dabei von dem Abschaltmittel freikommt und somit bewirkt, daß der Motor nicht eingeschaltet werden kann.

Eine bevorzugte Ausgestaltung der Erfindung sieht vor, das Schaltelement als eine einen Schaltnocken aufweisende Schaltscheibe auszubilden. Die Schaltscheibe ist auf der Motorwelle gelagert und mit der Bremse verschraubt, die auf dem Wellenzapfen der Motorwelle beweglich gelagert ist.

Nach einer weiteren Ausgestaltung der Erfindung wird vorgeschlagen, den Schaltnocken der Schaltscheibe mit einer in einem Stützkörper angeordneten, vorgespannten Feder zu beaufschlagen. Die vorgespannte Feder des Stützkörpers drückt im Normalfall permanent gegen die der Feder zugewandte Fläche des Schaltnockens der Schaltscheibe. Der Schaltnocken wird dadurch in einer Position gehalten, in der er das positionsgebundene Abschaltmittel immer betätigt.

Nach einem Vorschlag der Erfindung ist das Abschaltmittel als ein Schalter ausgebildet, der einen dem Schaltnocken zugewandten Schaltstift aufweist und dem Stützkörper gegenüberliegend angeordnet ist. Der durch die Feder in z.B. senkrechter Position gehaltene Schaltnocken beaufschlagt mit seiner von der Feder abgewandten Fläche den Schaltstift des Schalters. Ein jetzt geschlossener Schaltkontakt des betätigten Schalters, der z.B. in der Zuleitung zum Bremsmotor bzw. Getriebebremsmotor liegt, kann ein Starten einer Auf- oder Abwärtsfahrt der mit ihrer zulässigen Nenn- bzw. Nutzlast beladenen Fahrbühne nicht verhindern, da der Stromkreis nicht unterbrochen ist.

Bei einer Beladung der Fahrbühne über ihre zulässige Nennlast hinaus, wird hingegen eine durch die Überladung entstehende höhere Kraft drehmomentartig über die Motorwelle respektive ein vorgeschaltetes Getriebe auf die Bremse übertragen. Es drehen sich daher die Motorwelle und die Einheit Bremse mit angeschraubter Schaltscheibe in Umfangsrichtung. Aufgrund dieser radialen Bewegung drückt die der Feder zugewandte Fläche des Schaltnockens gegen die vorgespannte Feder. Damit einhergehend gibt die von der Feder abgewandte, sich von dem Schalter entfernende Fläche des Schaltnockens den Schaltstift des Schalters frei. Dadurch wird der geschlossene Schaltkontakt des Schalters geöffnet. Eine Auf- oder Abwärtsfahrt der überladenen Fahrbühne läßt sich jetzt nicht starten. Einhergehend mit der Einschaltverriegelung des Bremsmotors kann die Überladung der Fahrbühne durch ein optisches und/oder akustisches Warnsignal angezeigt werden. Die Fahrbühne muß erst bzw. braucht nur bis zu ihrer zulässigen Nennlast entladen werden. Die vorgespannte Feder des Stützkörpers drückt dann den Schaltnocken der Schaltscheibe wieder in die Schaltposition, und der Schaltstift des Schalters wird betätigt. Ein Aufwärts- oder Abwärtshub der Fahrbühne kann jetzt wieder gestartet werden.

Bei der Erfindung wird zur Startfreigabe und/oder Startsperre der Auf- oder Abwärtsfahrt vorzugsweise ein Mikroschalter eingesetzt, dessen Schalt-Hysterese nur einen Bruchteil eines Millimeters ausmacht. Durch die äußerst geringe Schalt-Hysterese des Mikroschalters wird ein minimales Zusammendrücken der Feder im Grenzbereich der Nutzlast sofort erfaßt und über den Schaltkontakt in eine Einschaltverriegelung umgesetzt. Dadurch, daß die Bremse auf dem Motorwellenende des Bremsmotors oder des bei Bauaufzügen vorzugsweise eingesetzten Getriebebremsmotors gelagert ist, werden die zur Abbremsung erforderlichen Kräfte auf ein Minimum reduziert. Die für die Überlastsicherung benötigten Bauteile, Mikroschalter und Stützkörper mit vorgespannter Feder, können deshalb sehr klein und damit auch preisgünstig gehalten werden. Sie werden von der Bremshaube abgedeckt und somit vor Witterungseinflüssen, z.B. Wasser, Staub und Schmutz, geschützt. Eine außermittige bzw. einseitige Beladung der Fahrbühne hat allenfalls einen minimalen Einfluß auf die Schaltgenauigkeit der Überlastsicherung.

Weitere Einzelheiten und Vorteile der Erfindung ergeben sich aus den Ansprüchen und der nachfolgenden Beschreibung, in der ein in den Zeichnungen anhand eines Bauaufzugs dargestelltes Ausführungsbeispiel der Erfindung näher erläutert ist. Es zeigen:
- Fig. 1: einen Bauaufzug mit einer Fahrbühne in der Seitenansicht dargestellt;
- Fig. 2: eine auf einer Motorwelle angeordnete Bremse des Motors der Fahrbühne in der Teilansicht und im Längsschnitt dargestellt;
- Fig. 3: einen Schnitt entlang der Linie III-III von Fig. 2, mit einer in Einschaltposition dargestellten Schaltscheibe; und
- Fig. 4: die Schaltscheibe gemäß Fig. 3 in der Ausschaltposition dargestellt.

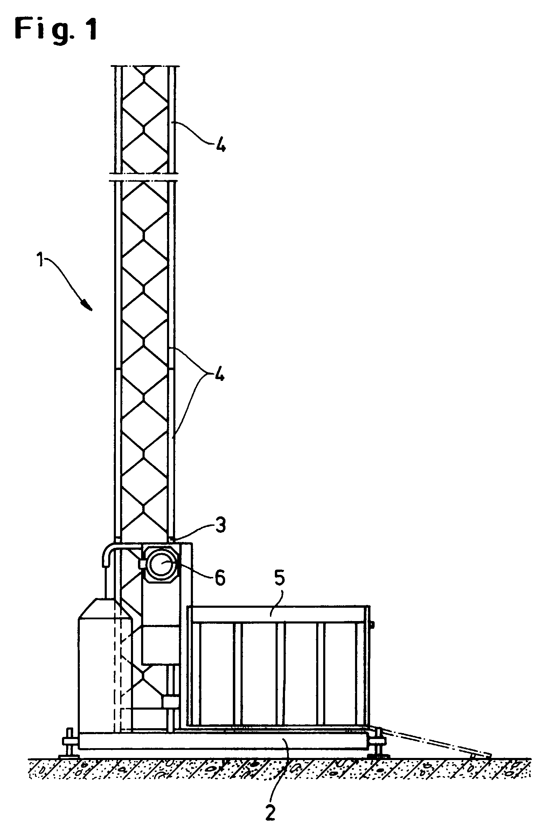

Der in Fig. 1 dargestellte Bauaufzug 1 ist als kompakte Grundeinheit ausgebildet. Diese ist versehen mit einem Grundrahmen 2, einem weitgehend rechtwinklig hieran befestigten Basismastelement 3, an dem weitere Mastelemente 4 festlegbar sind, und einer Fahrbühne 5, die mittels eines Antriebes 6 (beispielsweise in Form eines Getriebebremsmotors) entlang dem Basismastelement 3 und dem hiermit verbundenen weiteren Mastelementen 4 verfahrbar ist.

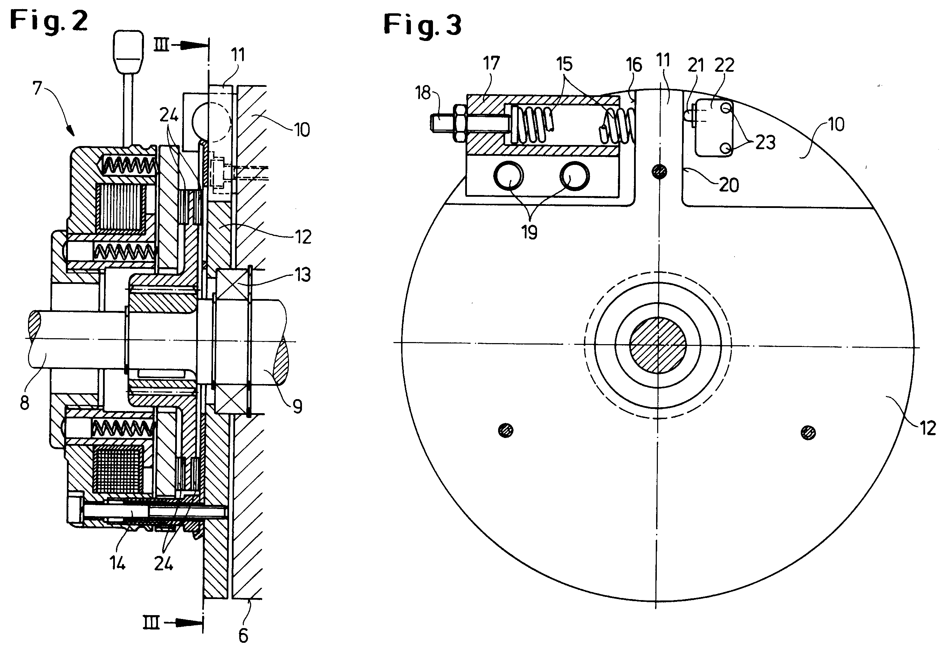

Gemäß Fig. 2 ist eine im Teilschnitt dargestellte Federdruck-Sicherheitsbremse 7 auf einem Wellenzapfen 8 der Motorwelle 9 des Getriebebremsmotors 6 aufgeflanscht. Die Bremse 7 befindet sich in Bremsstellung. Zwischen dem Motorschild 10 und der Bremse 7 ist ein Schaltelement in Form einer mit einem Schaltnocken 11 ausgebildeten Schaltscheibe 12 über ein Lager 13 auf der Motorwelle 9 angeordnet. Die Schaltscheibe 12 ist über eine Schraube 14 mit der Bremse 7 lösbar verbunden.

Die Fig. 3 zeigt die Schaltscheibe 12 in der Einschaltposition. Der Schaltnocken 11 wird durch den Druck einer Feder 15 auf seine der Feder 15 zugewandten Betätigungsfläche 16 in senkrechter Position gehalten. Die Feder 15 ist in einem Stützkörper 17 geführt und durch eine Schraube 18 vorgespannt. Der Stützkörper 17 ist mit zwei Schrauben 19 am Motorschild 10 angeschraubt. Der Schaltnocken 11 liegt mit seiner der Feder 15 abgewandten Betätigungsfläche 20 an einem Schaltstift 21 eines Mikroschalters 22 an, der mit zwei Schrauben 23 ebenfalls am Motorschild 10 angeschraubt ist.

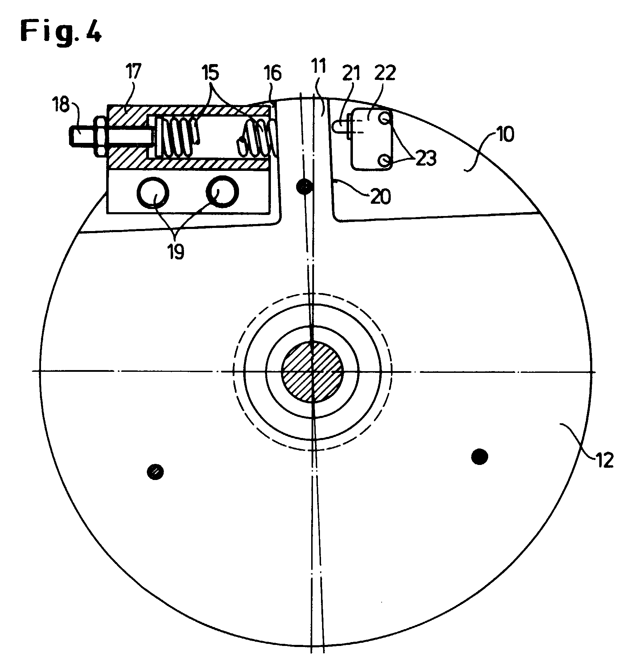

In Fig. 4 ist die Schaltscheibe 12 in ihrer Ausschaltposition dargestellt. Die Schaltscheibe 12 hat sich mit ihrem Schaltnocken 11 gegen den Druck der Feder 15 zum Stützkörper 17 hin bewegt, d.h. sich von dem Mikroschalter 22 entfernt. Dabei wird der Schaltstift 21 von der der Feder 15 abgewandten Betätigungsfläche 20 des Schaltnockens 11 freigegeben und stellt sich nach außen vor.

Nachfolgend wird anhand der Fig. 1 bis 4 die Funktionsweise der Schaltscheibe 12 bei einer mit zulässiger Nenn- bzw. Nutzlast beladenen und bei einer überladenen Fahrbühne 5 erläutert.

Die gemäß Fig. 1 in Ruhestellung befindliche Fahrbühne 5 des Bauaufzuges 1 ist bis zu ihrer zulässigen Nennlast beladen. Die Bremse 7 des Getriebebremsmotors 6 ist in Bremsstellung und hält über ihre Reibbeläge 24 die Fahrbühne 5 in Ruhestellung (vgl. Fig. 2). Der Schaltnocken 11 der Schaltscheibe 12 wird durch Anlage an der vorgespannten Feder 15 in senkrechter Position gehalten. Die von der Feder 15 abgewandte Betätigungsfläche 20 drückt den Schaltstift 21 in das Gehäuse des Mikroschalters 22 (vgl. Fig. 3). Ein jetzt geschlossener Schaltkontakt des Mikroschalters 22 ermöglicht über eine geeignete Schaltung, z. B. eine Verriegelungsschaltung, ein Einschalten des Getriebebremsmotors 6. Eine Auf- oder Abwärtsfahrt der beladenen Fahrbühne kann nun erfolgen.

Wenn die Fahrbühne 5 über ihre zulässige Nennlast hinaus beladen ist, wird eine durch die Überladung entstehende höhere Kraft über das Getriebe und die Motorwelle 9 des Getriebebremsmotors 6 drehmomentartig auf die Bremse 7 übertragen. Dabei wird die Schaltscheibe 12 über die mit ihr verschraubte Bremse 7 mitgedreht. Bei der radialen Drehung der Schaltscheibe 12 wird die vorgespannte Feder 15 durch die Betätigungsfläche 16 des Schaltnockens 11 weiter zusammengedrückt und der Schaltstift 21 von der Betätigungsfläche 20 freigegeben. Dadurch tritt der Schaltstift 21, der nur eine im Millimeterbereich liegende Schalt-Hysterese aufweist, nach außen. Der jetzt geöffnete Schaltkontakt des Mikroschalters 22 verhindert über die Verriegelungsschaltung das Einschalten des Getriebebremsmotors 6. Einer Bedienungsperson kann die Überladung durch beispielsweise ein optisches oder akustisches Signal angezeigt werden. Nach dem Abladen der überladenen Fahrbühne 5, z. B. bis lediglich auf ihre zulässige Nennlast, wird der Schaltnocken 11 durch die vorgespannte Feder 15 wieder in die senkrechte Position zurückgedrückt und der Mikroschalter 22 über den Schaltstift 21 betätigt. Erst dann kann der Getriebebremsmotor 6 eingeschaltet werden und eine Auf- bzw. Abwärtsfahrt der Fahrbühne 5 erfolgen.

## Patentansprüche

1. Hubwerk, das mit einem Brems- oder Getriebebremsmotor ausgerüstet ist und eine Überlastsicherung aufweist, insbesondere Bauaufzug, mit einer Fahrbühne oder dergleichen,
**dadurch gekennzeichnet**,
daß die Überlastsicherung ein in Umfangsrichtung bewegliches, zwischen dem Motor (6) und der Bremse (7) angeordnetes Schaltelement (12) aufweist, dem ein positionsgebundenes Abschaltmittel (22) zugeordnet ist.

2. Hubwerk nach Anspruch 1,
**dadurch gekennzeichnet,**
daß das Schaltelement als eine einen Schaltnocken (11) aufweisende Schaltscheibe (12) ausgebildet ist.

3. Hubwerk nach Anspruch 2,
**gekennzeichnet durch**
einen eine gegen den Schaltnocken (11) vorgespannte Feder (15) aufweisenden Stützkörper (17).

4. Hubwerk nach Anspruch 3,
**dadurch gekennzeichnet**,
daß das Abschaltmittel einen mit einem Schaltstift (21) dem Schaltnocken (11) zugewandten Schalter (22) aufweist, der dem Stützkörper (17) gegenüberliegend angeordnet ist.
